# EUROPEAN PATENT APPLICATION

(11) **EP 4 550 802 A1**
(43) Date of publication of application: **07.05.2025**
(21) Application number: 24205661.2
(22) Date of filing: 09.10.2024
(51) Int. Cl.: H04N 21/41, H04N 21/434, H04N 21/439, H04N 21/44, H04N 21/442, H04N 21/443, H04N 21/45, H04N 21/454, H04N 21/462

(54) **SYSTEMS AND METHODS FOR CONTENT PROVISION**

(30) Priority: 02.11.2023 GB 202316802
(71) Applicant: Sony Interactive Entertainment Inc., Tokyo 108-0075 (JP)
(72) Inventor: THRESH, Lewis, London, W1F 7LP (GB)
(74) Representative: D Young & Co LLP

(57) **Abstract**

A system for providing content for output to a user device, the system comprising: an identification unit configured to identify a user device preference indicative of a reduction of an output property of the user device for one or more components of the content; a reduction unit configured to reduce a contribution, to the content, of the components to obtain reduced content; and a provision unit configured to provide the reduced content to the user device for output.

## Description

### Field of Invention

The present invention relates to systems and methods for providing content for output to a user device.

### Background

Over the years, the variety of devices capable of reproducing content and the types of content reproducible by individual devices has increased. For example, in the past, a user may have possessed one device for reproducing audio content such as an MP3 player and another device for playing handheld video games. However, in recent times, many users may possess a smartphone for example, which is capable of reproducing audio, image and video game content. Moreover, a user will also now often possess many different types of devices that are similarly able to reproduce a wide variety of types of content. Examples of such devices include smartwatches, smart televisions (smart TVs), smart fridges, personal computers, video game consoles, and tablet displays.

A user may be able to set one or more user device preferences for a respective one of their user devices. Example user device preferences include: a display brightness level, an audio volume output level, a power usage limit, a thermal limit, whether a transmitter/receiver is enabled/disabled (e.g. enabling/disabling flight mode), etc.

Additionally, when providing content to a user device for output, it is desirable to increase an efficiency in the provision of the content to the user device.

It is in this context that the present disclosure arises.

### Summary of the Invention

In a first aspect, a system is provided in claim 1.

In another aspect, a method is provided in claim 13.

Further respective aspects and features of the invention are defined in the appended claims.

Embodiments of the present invention will now be described by way of example with reference to the accompanying drawings, in which:
- Figure 1 schematically illustrates an example entertainment system;
- Figures 2 schematically illustrates an example system; and
- Figure 3 schematically illustrates an example method.

### Description of the Embodiments

In the following description, a number of specific details are presented in order to provide a thorough understanding of the embodiments of the present invention. It will be apparent, however, to a person skilled in the art that these specific details need not be employed to practice the present invention. Conversely, specific details known to the person skilled in the art are omitted for the purposes of clarity where appropriate.

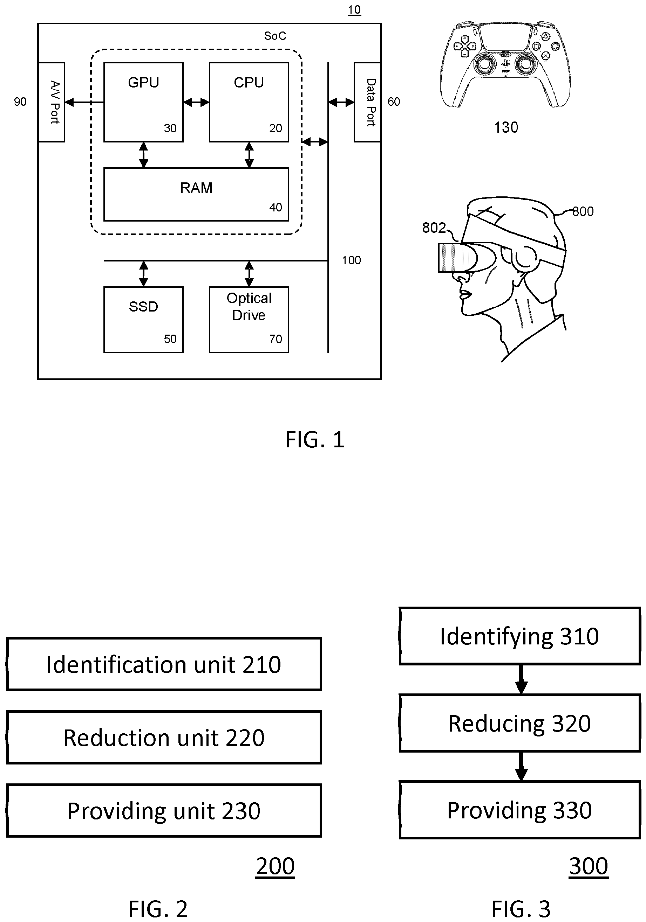

Referring to Figure 1, an example of an entertainment system 10 is a computer or console.

The entertainment system 10 comprises a central processor 20. This may be a single or multi core processor. The entertainment system also comprises a graphical processing unit or GPU 30. The GPU can be physically separate to the CPU, or integrated with the CPU as a system on a chip (SoC).

The entertainment device also comprises RAM 40, and may either have separate RAM for each of the CPU and GPU, or shared RAM. The or each RAM can be physically separate, or integrated as part of an SoC. Further storage is provided by a disk 50, either as an external or internal hard drive, or as an external solid state drive, or an internal solid state drive.

The entertainment device may transmit or receive data via one or more data ports 60, such as a USB port, Ethernet ^{®} port, WiFi ^{®} port, Bluetooth ^{®} port or similar, as appropriate. It may also optionally receive data via an optical drive 70.

Interaction with the system is typically provided using one or more handheld controllers 130.

Audio/visual content from the entertainment device is typically provided to one or more user devices through one or more A/V ports 90, or through one or more of the wired or wireless data ports 60.

Where components are not integrated, they may be connected as appropriate either by a dedicated data link or via a bus 100.

An example of a device for displaying images provided by the entertainment system is a head mounted display 'HMD' 802, worn by a user 800. Alternatively or in addition, a TV or monitor may be used.

Some user device preferences for a user device may modify (i.e. increase or reduce) an output property of the user device. In a case where a user device preference reduces one or more output properties of the user device for content to be output by the user device, processing resources may be wasted by providing content to the user device for output at a quality level that is that is too high for the user to perceive due to the reduced output properties of the user device resulting from the user device preferences.

Therefore, there is a need to provide users with a processing method and a system that may advantageously reduce an inefficient use of processing resources caused by one or more device preferences.

Accordingly, turning now to figure 2, in an embodiment of the present description, a system 200 for providing content to a user device for output is provided. The system 200 comprises: an identification unit 210; a reduction unit 220; and a provision unit 230. It should be noted that the identification unit 210, reduction unit 220, and provision unit 230 may all be comprised by a single processing device (which may optionally be a user device). Alternatively, each of the identification unit 210, reduction unit 220, and provision unit 230 may be comprised by a separate device. As an another alternative, two of the identification unit 210, reduction unit 220, and provision unit 230 may be comprised by a first device and the remaining unit may be comprised by a second device.

A user device is any device that is capable of outputting content. Example user devices include, but are not limited to: a television, an HMD, speakers, headphones, one or more speakers, a smartphone, a laptop, a display screen, etc.

Additionally, in some cases, a plurality of individual devices may constitute 'a user device'. For example, a television and a sound-bar may be different individual devices and may each be considered 'a user device', but in some cases, the combination of the television and the sound-bar may be considered 'a user device' (such as when the television outputs a video component of content whilst the sound-bar outputs a complementary audio component of the content).

The identification unit 210 is configured to identify a user device preference indicative of a reduction of an output property of the user device for one or more components of the content. The reduction unit 220 is configured to reduce a contribution, to the content, of the components to obtain reduced content. The provision unit 230 is configured to provide the reduced content to the user device for output.

The content may, for example, be audio content such as music, podcasts, audiobooks, voice over IP (VOIP), etc. The content may alternatively, or additionally, be video content such as a video recording, a video call, a movie, a television show, etc. It should be noted that video content may include, or be provided alongside, corresponding audio content. The content may alternatively, or additionally, be interactive content, such as a video game.

Content may comprise one or more components that may characterise one or more properties of the content for output by a user device. For example, content may comprise one or more audio components, colour components, haptic components, etc.

An audio component may characterise one or more properties of the audio output of the content. For example, an audio component may be an audio output signal that is provided to a user device, and the user device may be configured use the audio output signal to reproduce at least a portion of the audio output of the content (e.g. by providing the audio output signal to a speaker or headphones). In some cases, another audio component may be another audio output signal, and the two different audio output signals may each provide an audio output signal for a different audio channel (e.g. left and right audio channels). Of course, it will be appreciated that additional audio output signals may be provided for additional audio channels.

Alternatively, or in addition, one or more audio components may be representative of sound emitted by one or more audio sources. For example, a respective audio component may be representative of sound emitted by a respective participant in a VOIP call or chat.

In some cases, one or more audio components may alternatively, or additionally, be representative of a type of sound in the content. For example, in the case of interactive content, background music may be provided in addition to sound effects produced by virtual sound sources in the interactive content. In these cases, one audio component may be representative of the background music and one or more other audio components may be representative of one or more sound effects produced one or more virtual sound sources in the interactive content.

In some cases, a respective audio component may be representative of a respective type of sound effect in the interactive content. A sound effect could, for example, be categorised based on a nature of the virtual sound source for that sound effect. For example, in a case where the interactive content is a video game, a sound effect could be categorised based on whether its respective virtual sound source is a non-player character (NPC) that is friendly to a user (such as a trader) or an NPC that is hostile to a user (such as a spooky skeleton). Alternatively, or in addition, a sound effect could be categorised based on a relative distance between the virtual sound source emitting the sound effect and a virtual position at which the sound effect is detected by a virtual microphone and/or the direction of the virtual sound source relative to the virtual position at which the sound effect is detected by a virtual microphone.

It will be appreciated that the above examples of audio components have merely been provided to illustrate some of the types of audio components of content that may be used in accordance with the techniques of present disclosure and should not be construed as limiting. Therefore, it will be appreciated that any other suitable audio components of content may be used with the techniques of the present disclosure in addition or as an alternative to those described in the above examples.

A colour component (which may also be referred to as a display component) may characterise one or more properties of a display output of the content. For example, a colour component may be a display output signal that is provided to a user device, and the user device may be configured use the display output signal to display at least a portion of an image output of the content.

In some cases, a respective colour component of the content may be representative of a respective colour channel of a colour output model. For example, a respective colour component may be representative of one of a red, green and blue colour channel for an RGB (red-green-blue) output model. Alternatively, a respective colour component may be representative of one of a luma, and one or more of the chroma channels for YUV output colour model. Of course, it will be appreciated that any other suitable colour output model may also be used in accordance with techniques of the present disclosure

Alternatively, or in addition, a respective colour component of the content may be representative of a respective colour to be output by at least a portion of a display. It should be noted that a colour component may be representative of a spectral colour (i.e. a colour that can be represented by monochromatic light such as blue, green, or red) or a non-spectral colour (i.e. a colour that is represented by a combination of wavelengths of light such as pink or brown).

A haptic component may characterise one or more properties of a haptic output of the content. For example, a haptic component may be a haptic output signal that is provided to a user device, and the user device may be configured use the haptic output signal to provide one or more types of haptic feedback (such as a vibration, a pushing force, resistive force or any other suitable form of haptic feedback). In some cases, one haptic component may be representative of one type of haptic feedback and another haptic component may be representative of another type of haptic feedback.

As previously noted, the identification unit 210 is configured to identify a user device preference indicative of a reduction of an output property of the user device for one or more components of the content.

In some embodiments of the present disclosure, the user device may notify the identification unit 210 of a user device preference indicative of a reduction of an output property of the user device (for example, by transmitting a notification to the identification unit 210).

In some embodiments, a user input setting the user device preference may be received by the identification unit 210, and the identification unit 210 may be configured to identify the user device preference based on the received user input. In these cases, the user input may be provided to both the user device and the identification unit 210. For example, a wired or wireless signal representative of the user input may be received by both the user device and the identification unit 210. Alternatively, the user input may be received initially by the identification unit 210, and the identification unit 210 may be configured to forward the user input to the user device.

In some embodiments, the user device may comprise at least the identification unit 210 of the system 200, and the identification unit 210 may directly detect the user device preference from the user device (e.g. by reading a value stored in memory, or detect a user input to the user device by a user setting the user device preference) in order to identify a user device preference indicative of a reduction of an output property of the user device for one or more components of the content.

One example user device preference is a user device preference that may set an audio output volume level of the user device, which may set the audio volume output level of the user device as a percentage or fraction of the maximum audio volume output level of the audio device for example.

Therefore, in some embodiments of the present disclosure, a user device preference that is indicative of a reduction of an output property of the user device for one or more components of the content may be indicative of a reduction in an audio output volume of the user device. In these embodiments, at least one of the components of the content is an audio component.

Alternatively, or in addition, a user device preference may set a number of channels for audio output (e.g. stereo output, mono output, etc.). Therefore, in some embodiments of the present disclosure, a user device preference that is indicative of a reduction of an output property of the user device for one or more components of content the may be indicative of a reduction in a number of audio output channels of the user device.

In some cases, the identification unit 210 may not be able to directly identify that a user preference has reduced an audio output volume of the user device.

Therefore, optionally, the identification unit 210 may be configured to identify the reduction in audio output volume of the user device by using one or more microphones.

In these cases, the identification unit 210 may comprise at least one microphone. Alternatively, or in addition, the user device may comprise at least one microphone and data representative of an audio volume detected by the at least one microphone may be provided to the identification unit 210 by the user device. Alternatively, or in addition, the system 200 may comprise at least one microphone that may be external to the user device and the identification unit 210, and the at least one microphone may be configured to provide data representative of an audio volume detected by the at least one microphone to the identification unit 210.

In these cases, the volume output by a user device may be variable even if a user device preference is not changed to modify an audio output volume of the user device because the audio volume in the content will itself be variable. Therefore, the identification unit 210 may further optionally be configured to deconvolve the audio volume detected by the one or more microphones with the corresponding audio volume in the content to identify the reduction in audio output volume of the user device by using one or more microphones.

In some cases, the content being output by the user device may not be the only source of sound that may be detected by the one or more microphones. Therefore, in these cases, the identification unit 210 may optionally be configured to isolate the audio of the content being output by the user device from the audio detected by the one or more microphones. In these cases, the identification unit 210 may be configured to identify the reduction in audio output volume of the user device by identifying a reduction of the audio of the content being output by the user device isolated from the audio detected by the one or more microphones.

For example, since the identification unit 210 may, in some cases, know the audio components that are to be provided to the user device for output, the identification unit 210 may isolate the audio of the content being output by the user device from the audio detected by the one or more microphones by filtering the audio detected by the microphones to the frequencies of the audio components that are to be provided to the user device for output. It will be appreciated that any other suitable signal processing technique may alternatively or additionally be used.

Further optionally, the identification unit 210 may only identify that a user preference has reduced an audio output volume of the user device if the audio volume detected by the one or more microphones has decreased by a predetermined amount, which may prevent the identification of a false positive (due to a user walking in-front of at least one of the microphones for example). The predetermined amount may be a fixed reduction (e.g. 1 decibel, 2 decibels, 5 decibels, 10 decibels, etc.) or may a relative reduction (e.g. 1%, 2%, 5%, 10%, etc.).

Alternatively, or in addition, the identification unit 210 may only identify that a user preference has reduced an audio output volume of the user device if the audio volume (or a rolling average of the audio volume) detected by the one or more microphones has decreased for at least a predetermined period of time.

Alternatively, or in addition, the identification unit 210 may only identify that a user preference has reduced an audio output volume of the user device if the audio volume detected by two or more microphones has decreased, which may prevent the identification of a false positive (due to a user walking in-front of at least one of the microphones for example). Optionally, in these cases, the identification unit 210 may only identify that a user preference has reduced an audio output volume of the user device if a relative reduction in audio volume detected by a respective one of the is similar to a relative reduction in the audio volume detected by another one of the microphones. It should be noted that the relative reduction refers to the reduction in audio volume detected by a respective microphone between a first point in time and a second point in time.

Another example user device preference is a user device preference that may modify a display output for one or more colours.

Therefore, in some embodiments of the present disclosure, a user device preference that is indicative of a reduction of an output property of the user device for one or more components of the content may be a user device preference indicative of a reduction in a display output for one or more colours. In these embodiments, at least one of the components is a colour component

For example, a user device preference may change a display output of the user device from a high dynamic range (HDR) to a standard dynamic range (SDR). Alternatively, or in addition, a user device preference may change one or more of a colour gamut, a contrast level and/or a brightness level for a display output of the user device. As another example, a user device preference may change a colour depth of the user device (e.g. reduce a colour depth from 16-bit colour to 8-bit colour, or setting a colour depth to greyscale).

In some cases, a user device preference may set a display of the user device to a *night mode* or a *comfort mode* where blue light is at least partially filtered, optionally only between sunset and sunrise, because overexposure to blue light may be detrimental to sleep quality among other potentially adverse health effects. It should be noted that, irrespective of the validity of any claims about the detrimental health effects that may caused by over exposure to blue light, many devices still feature such blue light filtering user device preferences and these preferences are used by some users; it is the use of such a user device preference (or any of the other user device preferences discussed elsewhere herein) that may enable the use of the presently disclosed techniques.

In some cases, a user device preference may enable a *colour-blind mode,* which may apply a colour correction to colours output by a display of the user device that changes how colours are displayed by the user device.

Alternatively, or in addition, a user device preference may invert colours output by a display of the user device, where the colour inversion is performed by, for at least one respective colour channel of a given colour model, subtracting the value of the respective colour channel from the maximum possible value for the respective colour channel.

As a worked example, consider an 8-bit RGB pixel having colour channel values of [213, 91, 145] (the maximum value for one colour channel of an 8-bit RGB image is 255). In this example, if all of the colour channels are inverted, the inverted RGB colour channel values are [(255-213)=42, (255-91)=164, (255-145)=110]. Of course, in some implementations only one (or only two) of the colour channels may be inverted. For example, if only the green colour channel is inverted, the inverted image may have colour channel values of [213, 164, 145].

It should also be appreciated that such an inversion is not limited to an RGB colour model and may, for example, be applied to a YUV colour model (in which case all of the colour channels may be inverted, only the luma channel may be inverted, or only one or both of the chroma channels may be inverted). Additionally, such an inversion is not limited to 8-bit colour channels and these techniques may be applied to colour channels having fewer bits per channel or more bits per channel.

Optionally, in these embodiments, the identification unit 210 may be configured to identify a reduction in a display output property of the user device by using one or more imaging sensors in a similar manner to how the identification unit 210 may be configured to identify a reduction in an audio output property of the user device by using one or more microphones that has been described elsewhere herein. The one or more imaging sensors may be one or more of a charged-coupled device (CCD), a charged metal-oxide-semiconductor (CMOS), a camera (which may optionally be comprised by a users phone, head mounted display unit, or another camera operably coupled to the identification unit), a colourimeter, and/or any other suitable type of imaging sensor.

The one or more imaging sensors may, for example, identify a change in any of the display output of the user device, which has been described elsewhere herein.

It should be noted that, in some embodiments of the present disclosure, the identification unit 210 may be configured to identify a reduction in an audio output property of the user device using one or more microphones and identify a reduction in a display output property of the user device using one or more imagining sensors. In some cases, another device (which may be, or comprise, the identification unit 210) may comprise at least one of the microphones and at least one of the imaging sensors. For example, a smartphone could be used for one or more of the identification unit 210, at least one microphone, and/or at least one camera).

As previously noted, the reduction unit 220 is configured to reduce a contribution, to the content, of the one or more components for which an output property of the user device has been reduced to obtain reduced content.

In embodiments of the present disclosure where a user device preference may be indicative of a reduction in an audio output volume of the user device, at least one of the components is an audio component. In these embodiments, the reduction unit 220 may be configured to reduce the contribution of the audio component to the content.

In some of these embodiments, the reduction unit 220 may be configured to reduce the contribution of the audio component by lowering a quality of the audio component. For example, if a user reduces an output volume of the user device to a level where the audio volume of the user device is considered to be relatively quiet for normal human perception (or in comparison to the user's normal listening volume) a bit rate of the audio component of the content may be reduced.

As an example, if the content has an audio component with a bit rate of 256 kbit/s, the reduction unit 220 may be configured to reduce a contribution of the audio component to the content by reducing the bit rate of the audio component to 192 kbit/s. In this example, the reduction unit 220 obtains reduced content that is identical to the original content except for the bit rate of the audio component having been reduced to 192 kbit/s from 256 kbits/s.

As previously noted, the provision unit 230 is configured to provide the reduced content to the user device for output.

For example, the provision unit 230 may transmit the reduced content to the user device to provide the reduced content to the user device for output. Alternatively, the user device may comprise at least the provision unit 230. In this case, the provision unit 230 may provide the reduced content to the user device for output by outputting the reduced content (e.g. displaying the reduced colour components on a display of the user device and/or outputting reduced audio components from an audio output of the user device).

Returning to the above example where the reduced content is identical to the original content except for the bit rate of the audio component having been reduced to 192 kbit/s from 256 kbits/s, the provision unit 230 may provide the reduced content to the user device for output. The user device may then output the reduced content. Because an audio output volume of the user device is reduced because of a user device preference, the reduced audio bit rate may be imperceptible to the user (or at least less perceptible in comparison to a case where the audio output volume of the user device is not reduced).

Accordingly, a more efficient usage of resources (e.g. a reduced bandwidth usage due to the lower audio bit rate) may be achieved when providing content to a user device without impacting a user's perception of the content by using techniques according to the present disclosure.

Optionally, in some embodiments of the present disclosure, a degree of reduction of a respective component of the content may be proportionate to a degree of reduction in an output property of the user device for the respective component indicated by the identified user preference.

For example, an amount of reduction to the contribution of the audio component may be proportional to the indicated reduction in an audio output volume of the user device. For example, or example, if the identified user device preference is indicative of a large reduction an audio output volume of the user device (relative to another case), the audio bit rate may reduced by a larger amount (relative to the other case).

Optionally, in some cases, a user device preference may indicate that the user has muted the output of audio from the user device. In this case, the reduction unit 220 may be configured to reduce the contribution of the audio component by removing the audio component from the content. It should be noted that the removal of the audio component from the content to obtain reduced content may also be applicable in other cases, such as when a user device preference has reduced an audio output volume of the user device to a degree that the content audio would no longer be resolvable by the acuity of human hearing.

Alternatively, or in addition, in some embodiments of the present disclosure, at least the provision unit 230 may be comprised by a server or a streaming system, and the user device may be a client device. In these cases, the provision unit 230 may be configured to provide the reduced content to the client device for output by streaming the reduced content to the user device.

Therefore, in some embodiments of the present disclosure, the provision unit 230 may be configured to provide the reduced content to the user device by streaming the content to the user device. Optionally, in these embodiments, the reduction unit 220 may be configured to reduce the contribution of the components by reducing an encoding quality for at least one of the components.

Further optionally, in these embodiments, the reduction unit 220 may be configured to reduce the contribution of the components by not encoding at least one of the components.

For example, an encoding quality may be reduced by reducing an encoding bit rate (in a similar manner to reducing an audio bit rate which has been described elsewhere herein) for at least one of the components. It should be noted that the encoding bit rate may be reduced for just one type (e.g. video, audio, haptic, etc.) of component, or for a plurality of types of component.

As another example, a user device preference may mute the audio output of a user device. In this case, the reduction unit 220 may be configured to reduce the contribution of the audio component to the content by not encoding the audio component.

As a further example, a user device preference may set the audio output of a user device to mono audio output. In this example, the content may comprise a left-channel audio component and a right-channel audio component. The reduction unit 220 may obtain reduced content by not encoding one of the two audio components whilst encoding the other audio component (e.g. not encoding the L channel audio component and encoding the R channel audio component). Alternatively, the reduction unit 220 may obtain reduced content by encoding a single audio channel that is an average of the left and right audio channels. The provision unit 230 may provide the reduced content to the user device, and the user device may decode the received audio channel component and output the decoded audio component as mono audio.

It should be noted that any other suitable means for reducing an encoding quality for at least one of the components may be used in addition or as an alternative to the above examples.

Alternatively, in some embodiments of the present disclosure, the reduction unit 220 may be configured to reduce the contribution of the components by reducing a decoding quality for at least one of the components. Alternatively, or in addition, in some embodiments, the reduction unit 220 may be configured to reduce the contribution of the components by not decoding at least one of the components.

In these embodiments, the system 200 may receive the encoded content, the reduction unit 220 may be configured to reduce the contribution of the components by reducing a decoding quality for at least one of the components to obtain reduced content, and the provision unit 230 may provide the reduced content to the user device for output (it will be appreciated that the reduced content may optionally be re-encoded by the reduction unit 220 or the provision unit 230 before being provided to the user device for output).

Optionally, in these embodiments, the user device may comprise at least the reduction unit 220. Alternatively, in some cases, the provision unit 230 may transmit the reduced content to the user device to provide the reduced content to the user device for output.

In some embodiments of the present disclosure, the user device preference may be indicative of a reduction in a display output for one or more colours, and at least one of the components may be a colour component. In these embodiments, the reduction unit 220 may be configured to reduce the contribution of the colour component.

For example, in some embodiments of the present disclosure, the reduction unit 220 may be configured to reduce the contribution of the colour component by lowering a texture quality for textures where a proportion of the one or more colours (for which a reduction in a display output has been indicated by a user device preference) in a respective texture is above a predetermined threshold.

As an illustrative example, a user device preference may be indicative of reduction of a colour depth of the display output of the user device from a 16-bit colour depth to an 8-bit colour depth, so that any respective 16-bit colour in the content that does not have a direct correspondence to an 8-bit colour will be displayed by the user device as the 8-bit colour nearest to the respective 16-bit colour.

A proportion of the pixels in at least one texture in the content may be 16-bit colours that do not have a direct correspondence to an 8-bit colour. If this proportion is above the predetermined threshold (which may be selected by a user or by a developer for example) for a respective texture, the reduction unit 220 may reduce the texture quality for the respective texture in the content to obtain reduced content, which may then be provided to the user device by the provision unit 230 for output.

In this example, the reduction unit 220 may reduce the texture quality of the respective texture by converting the colour depth of the respective texture from 16-bit to 8-bit, which may then be provided to the user device for output. Because the conversion of the colour depth is performed for the respective texture before the reduced content is provided to the user device for output, bandwidth may advantageously be reduced (e.g. in a case where the provision unit 230 may be configured to provide the reduced content to the user device by streaming the content to the user device as described elsewhere herein).

Alternatively, or in addition, the reduction unit 220 may reduce the texture quality of the respective texture by reducing a pixel resolution of the texture. In some implementations, the pixel resolution may be reduced for the entirety of the respective texture. However, it will be appreciated that the present techniques are not limited to such an implementation. Fore example, in some cases, the pixel resolution of a respective texture may be reduced only in the portions of the respective texture that comprise the one or more colours for which a reduction in a display output has been indicated by a user device preference.

It will be appreciated that a reduction in pixel resolution may be performed using any known downscaling technique such as nearest neighbour, bilinear interpolation, bicubic interpolation, etc.

As another example, a user device preference may modify a contrast of a display output of the user device, which may be indicative of reduction in a colour depth of the display output for one or more colours. The user device preference may be identified by the identification unit 210. In this example, the reduction unit 220 may be configured to reduce the contribution of the colour component by lowering a texture quality for textures where a proportion of the one or more colours in a respective texture is above a predetermined threshold. The reduction unit 220 may use the techniques described above in the previous example to lower a texture quality where a proportion of the one or more colours in a respective texture is above a predetermined threshold.

Optionally, in these embodiments, the predetermined threshold may be proportional to the degree in the reduction in the display output for the one or more colours.

For example, if the identified user device preference is indicative of a reduction in a display brightness for the user device, the predetermined threshold may be proportionate to the degree of reduction in the display brightness of the user device. In a case where there is a large degree (relative to another case) of reduction in the display brightness of the user device, the predetermined threshold may be set lower (relative to the other case). Therefore, the proportion of textures that have their quality reduced by the reduction unit 220, or the amount of quality reduction that is applied to a respective texture, may be greater (relative to the other case). Therefore, whilst a larger quality reduction may be applied in the case where there is a larger degree of reduction in display output brightness (relative to the other case), this quality reduction may be less perceptible, or even imperceptible, to the user in comparison to where the same quality reduction is applied to content that is output by the user device at a higher display brightness.

It should be noted that the proportionality of the predetermined threshold relative to the degree in the reduction in the display output for the one or more colours is not limited to a linear proportionality, but may be any other suitable type of proportionality such as logarithmic (which may be more advantageous in some cases due to a human eye's logarithmic sensitivity to luminance).

In embodiments of the present disclosure where the reduction unit 220 may be configured to reduce the contribution of the colour component, the reduction unit 220 may alternatively or additionally reduce a contribution of the colour component by reducing an amount of rendering time for at least one of the one or more colours.

In some cases, the system 200 may generate/render the content that is provided to the user device for output. For example, the system 200 may comprise a processing device (such as the entertainment device 10), which may comprise a central processing unit (CPU) and/or a graphics processing unit (GPU) for rendering the content. Alternatively, or in addition, the system 200 may provide rendering instructions to another device, such as a server for streaming video games to a user device, and the other device may render the content. In these cases, the server may comprise the provision unit 230 that may be configured to provide the content for output to the user device by streaming the content to the user device.

As an example, in these embodiments, the reduction unit 220 may reduce an amount of rendering time for regions of an image frame to be rendered that comprise at least one of the one or more colours. Therefore, an efficiency for rendering an image frame may be advantageously increased.

Optionally, an amount of rendering time for the remaining regions of the image frame may be increased so that the total rendering time per image frame of the content remains constant. Therefore, in embodiments of the present disclosure, a perceived image quality may be advantageously increased without requiring a corresponding increase in compute resources.

Optionally, in some embodiments of the present disclosure, the user device preferences referred to elsewhere herein may exclude preferences that reduce an output property of one or more components of the content prior to the output of the one or more components of the content. In other words, a user device preference may be a user preference that directly modifies an output property of the user device.

For example, a user device preference may be any user preference that does not modify in and of itself the content, or a component thereof, provided by a device. However, a user device preference will modify how the output content is perceived by the user after it has been output.

To illustrate, the user device outputting content may have a particular user device preference enabled or disabled (although it should be noted that a user device preference is not limited to a binary choice) where an output property of the user device is reduced when the user device preference is enabled. If the user device is provided identical content irrespective of whether this preference is enabled or disabled, the output of the provided content by the device will be reduced in the case that the user device preference is enabled in comparison to the case where it is not. The present techniques exploit this reduction in the output property of the user device so that reduced content is provided to the user device in the case that this preference is enabled. This may advantageously reduce processing and/or bandwidth use without, or with only minimal, change to the user's perception of the content output relative to the non-reduced content being output when the user device preference is enabled. Of course, it will be appreciated that, when enabled, the user device preference itself may reduce a user's perception of the content output by the user device in comparison to when the preference is disabled (although some users may not perceive any difference for some types of reductions in output properties of a user device - e.g. a colour blind user would not perceive a reduction in a colour output for a colour they cannot see).

Optionally, in embodiments of the present disclosure, the system, and optionally the identification unit 210, may comprise a machine learning model trained to learn a user's habits for changing the one or more user device preferences.

For example, the machine learning model may be trained to learn that a user will turn down the audio volume of a user device outputting interactive content when the interactive content is a first-person shooter game in order to play music through another user device. The identification unit 210 may receive data from the machine learning model indicative of the learned user habit. In this example, the identification unit 210 may be configured to identify a user device preference reducing an audio output property of the user device in response to the user requesting interactive content for output by the user device when the requested interactive content is a first-person shooter.

Similarly, the trained machine learning model may learn that a user habitually enables a night mode on a user device (i.e. reduces the output of blue light) at a predictable time of day. In this example, the identification unit 210 may be configured to identify a user device preference reducing a display output property of the user device in response to the machine learning model predicting that it is the time of day at which the user will be likely to engage the night mode on their user device.

Referring now to figure 3, in some embodiments, a method 300 is provided. The method 300 comprises the steps of identifying 310 a user device preference indicative of a reduction of an output property of the user device for one or more components of the content; reducing 320 a contribution, to the content, of the components to obtain reduced content; and providing 330 the reduced content to the user device for output.

In some embodiments of the present disclosure, a computer program is provided. The computer program comprising computer executable instructions adapted to cause a computer system to perform any of the methods described elsewhere herein.

It will be appreciated that the above methods may be carried out on conventional hardware (such as the system 200, or entertainment device 10) suitably adapted as applicable by software instruction or by the inclusion or substitution of dedicated hardware.

Thus the required adaptation to existing parts of a conventional equivalent device may be implemented in the form of a computer program product comprising processor implementable instructions stored on a non-transitory machine-readable medium such as a floppy disk, optical disk, hard disk, solid state disk, PROM, RAM, flash memory or any combination of these or other storage media, or realised in hardware as an ASIC (application specific integrated circuit) or an FPGA (field programmable gate array) or other configurable circuit suitable to use in adapting the conventional equivalent device. Separately, such a computer program may be transmitted via data signals on a network such as an Ethernet, a wireless network, the Internet, or any combination of these or other networks.

The foregoing discussion discloses and describes merely exemplary embodiments of the present invention. As will be understood by those skilled in the art, the present invention may be embodied in other specific forms without departing from the spirit or essential characteristics thereof. Accordingly, the disclosure of the present invention is intended to be illustrative, but not limiting of the scope of the invention, as well as other claims. The disclosure, including any readily discernible variants of the teachings herein, defines, in part, the scope of the foregoing claim terminology such that no inventive subject matter is dedicated to the public.

## Claims

1. A system for providing content for output to a user device, the system comprising:
an identification unit configured to identify a user device preference indicative of a reduction of an output property of the user device for one or more components of the content;
a reduction unit configured to reduce a contribution, to the content, of the components to obtain reduced content; and
a provision unit configured to provide the reduced content to the user device for output.

2. The system according to claim 1, in which
the user device preference is indicative of a reduction in an audio output volume of the user device, and at least one of the components is an audio component; and
the reduction unit is configured to reduce the contribution of the audio component.

3. The system according to claim 2, in which
the identification unit is configured to identify the reduction in audio output volume of the user device by using one or more microphones.

4. The system according to claim 3, in which
the identification unit is configured to deconvolve the audio volume detected by the one or more microphones with the corresponding audio volume in the content to identify the reduction in audio output volume of the user device by using one or more microphones.

5. The system according to any one of claims 2-4, in which
the reduction unit is configured to reduce the contribution of the audio component by lowering a quality of the audio component.

6. The system according to any one of claims 2-4, in which
the reduction unit is configured to reduce the contribution of the audio component by removing the audio component from the content.

7. The system according to claim any one of the preceding claims, in which
the user device preference is indicative of a reduction in a display output for one or more colours, and at least one of the components is a colour component; and
the reduction unit is configured to reduce the contribution of the colour component.

8. The system according to claim 7, in which
the reduction unit is configured to reduce the contribution of the colour component by lowering a texture quality for textures where a proportion of the one or more colours in a respective texture is above a predetermined threshold.

9. The system according to claim 8, in which
the predetermined threshold is proportional to the degree in the reduction in the display output for the one or more colours.

10. The system according to any one of claims 7-9, in which
the reduction unit is configured to reduce the contribution of the colour component by reducing an amount of rendering time for at least one of the one or more colours.

11. The system according to any one of the preceding claims, in which
the provision unit is configured to provide the reduced content to the user device by streaming the content to the user device; and
the reduction unit is configured to reduce the contribution of the components by reducing an encoding quality for at least one of the components and/or by not encoding at least one of the components.

12. The system according to any one of claims 1-9, in which
the reduction unit is configured to reduce the contribution of the components by reducing a decoding quality for at least one of the components and/or by not decoding at least one of the components.

13. A method for providing content for output to a user device, the method comprising the steps of:
identifying a user device preference indicative of a reduction of an output property of the user device for one or more components of the content;
reducing a contribution, to the content, of the components to obtain reduced content; and
providing the reduced content to the user device for output.

14. Computer software which, when executed by a computer, causes the computer to carry out the method of claim 13.

15. A non-transitory machine-readable storage medium which stores computer software according to claim 14.
